# EUROPÄISCHE PATENTSCHRIFT

(11) **EP 2 823 219 B1**
(45) Veröffentlichungstag und Bekanntmachung des Hinweises auf die Patenterteilung: **03.02.2016**
(21) Anmeldenummer: 13708337.4
(22) Anmeldetag: 19.02.2013
(51) Int. Cl.: F21S 8/10, F21V 7/00, B60Q 1/00

(54) **BELEUCHTUNGSVORRICHTUNG FÜR EIN KRAFTFAHRZEUG**
LIGHTING DEVICE FOR A MOTOR VEHICLE
DISPOSITIF D'ÉCLAIRAGE POUR UN VÉHICULE AUTOMOBILE

(30) Priorität: 07.03.2012 AT 500622012
(43) Veröffentlichungstag der Anmeldung: 14.01.2015
(73) Patentinhaber: Zizala Lichtsysteme GmbH, 3250 Wieselburg (AT)
(72) Erfinder: REITINGER, Rüdiger, A-3512 Mautern an der Donau (AT); ALTMANN, Johann, A-3950 Gmünd (AT)
(74) Vertreter: Patentanwaltskanzlei Matschnig & Forsthuber OG
(86) Internationale Anmeldenummer: PCT/AT2013/050042
(87) Internationale Veröffentlichungsnummer: WO 2013/131114

(56) Entgegenhaltungen:
- EP-A2- 1 184 619
- EP-A2- 2 071 228
- US-A1- 2006 232 395
- US-A1- 2009 027 911
- US-A1- 2010 321 949

## Beschreibung

Die Erfindung betrifft eine Beleuchtungsvorrichtung für ein Kraftfahrzeug, umfassend eine Linse sowie zumindest eine Lichtquelle, wobei Licht von der zumindest einen Lichtquelle von der Linse in einen vor der Beleuchtungsvorrichtung liegenden Bereich projiziert wird. Weiters betrifft die Erfindung einen Fahrzeugscheinwerfer mit zumindest einer solchen Beleuchtungsvorrichtung.

Die Druckschriften EP 1 184 619 A2 und US 2009/0027911 A1 offenbaren Beleuchtungsvorrichtungen, welche auf ihren Rückseiten sowohl reflektierende Flächen als auch Einstrahlbereiche aufweisen.

J Projektionssysteme für Fahrzeugscheinwerfer, bei welchen das Licht von einer oder mehreren Lichtquellen über eine Projektionslinse zur Erzeugung einer Lichtverteilung in einen Bereich vor dem Fahrzeugscheinwerfer projiziert wird, sind hinlänglich bekannt. Häufig werden solche Projektionssysteme zur Erzeugung einer Abblendlichtverteilung, aber auch von Fernlichtverteilungen oder Tagfahrlichtverteilungen verwendet.

Es ist eine Aufgabe der Erfindung, ein Projektionsmodul zu schaffen, mit welchem unter Verwendung von lediglich einer Linse zwei oder mehrere Lichtfunktionen realisiert werden können.

Diese Aufgabe wird mit einer eingangs erwähnten Beleuchtungsvorrichtung dadurch gelöst, dass erfingdungsgemäß der Linse an ihrer Rückseite zumindest eine reflektierende Fläche zugeordnet ist, und/oder wobei die Linse an ihrer Rückseite zumindest einen Totalreflexionsbereich aufweist, wobei zumindest eine Lichtquelle über einen Einstrahlbereich Licht in die Linse einstrahlt, und wobei das in die Linse über den Einstrahlbereich eingestrahlte Licht von der zumindest einen reflektierenden Fläche und/oder dem zumindest einen Totalreflexionsbereich reflektiert und aus der Linse über deren Lichtaustrittsfläche austritt und in einen Bereich vor der Beleuchtungsvorrichtung projiziert wird.

Bei bekannten, herkömmlichen Linsen wird Licht von einer Lichtquelle auf die Linse gestrahlt, trifft auf die Linse auf deren Rückseite (Lichteintrittsfläche) auf und wird in die Linse hinein gebrochen. Nach einer weiteren Brechung tritt das Licht an der Lichtaustrittsfläche (Vorderseite) wieder aus und wird in einen Bereich vor der Linse bzw. der Beleuchtungsvorrichtung projiziert.

Die vorliegende Erfindung ist eine Beleuchtungsvorrichtung nach Anspruch 1.

Bei der vorliegenden Erfindung wird - alternativ oder zusätzlich zu der oben beschrieben "herkömmlichen Anordnung - Licht von einer oder mehreren Lichtquellen nicht über die Rückseite in die Linse eingestrahlt, sondern über eigene Lichteinstrahlbereiche. Diese Lichteinstrahlbereiche sind dabei im Gegensatz zu der Rückseite der Linse, über welche bei herkömmlichen Systemen Licht in die Linse eingestrahlt wird, "kleinräumig", also mit (deutlich) geringerer Lichteintrittsfläche ausgestattet als die Rückseite der Linse, sodass das eintretende Licht gezielt auf die reflektierenden Bereiche gelenkt werden kann.

In erster Linie ist in diesem Dokument unter "Rückseite" in Hinblick auf die Anordnung der reflektierenden Fläche (bzw. bei anderen Varianten mit Totalreflexionsbereichen) jene Fläche/Seite der Linse zu verstehen, über welche bei einer "herkömmlichen Beleuchtungsvorrichtung Licht über die Leuchtenvorrichtung in die Linse eintreten kann. Prinzipiell können sich die reflektierende Fläche und/oder der Totalreflexionsbereich aber auch in Bereichen oben/oberhalb, unten/unterhalb oder an den Seiten bzw. seitlich der Linse in Bereichen, in welche auch bei herkömmlichen Systemen eine Leuchtenvorrichtung Licht nicht strahlt, befinden.

Dabei ist zumindest ein Einstrahlbereich außerhalb der Rückseite der Linse angeordnet.

Durch Reflexion des auf diese Weise in die Linse eingestrahlten Lichtes an einer oder mehreren reflektierenden Flächen, welche der Rückseite der Linse zugeordnet sind, und/oder an einem oder mehreren totalreflektierenden Totalreflexionsbereichen an der Rückseite der Linse wird das Licht in Richtung der Lichtaustrittsfläche der Linse umgelenkt und in einen Bereich vor der Beleuchtungsvorrichtung projiziert.

Mit der Erfindung können eine oder mehrere Lichtquellen oberhalb, unterhalb oder seitlich der Linse positioniert werden. Der Bauraum der Beleuchtungsvorrichtung kann dadurch gering gehalten werden, und es können über eine Linse mehrere Lichtfunktionen, wie Fernlicht, Abblendlicht, Tagfahrlicht etc. durch geeignete Anordnung der Lichtquellen und der reflektierenden Flächen erreicht werden.

Entsprechend ist es zur Realisierung von mehreren Lichtfunktionen zweckmäßig, wenn zwei oder mehr Lichtquellen vorgesehen sind, welche jede über einen zugeordneten Einstrahlbereich Licht in die Linse einstrahlt, und wobei über die Einstrahlbereiche eingestrahltes Licht von der reflektierenden Fläche und/oder dem Totalreflexionsbereich reflektiert und aus der Linse über deren Lichtaustrittsfläche austritt und in einen Bereich vor der Beleuchtungsvorrichtung projiziert wird.

Um mit jeder Lichtquelle eine eigene Lichtfunktion realisieren zu können, ist vorgesehen, dass jeder Lichtquelle, welche Licht über einen Einstrahlbereich in die Linse einstrahlt, eine reflektierende Fläche oder ein Totalreflexionsbereich zugeordnet ist.

Dabei kann vorgesehen sein, dass Licht aus einer Lichtquelle, welche Licht über einen Einstrahlbereich in die Linse einstrahlt, direkt nach Reflexion an einer reflektierenden Fläche oder an dem einen Totalreflexionsbereich, oder nach weiterer Reflexion an einer weiteren reflektierenden Fläche oder an einem weiteren Totalreflexionsbereich, aus der Linse über deren Lichtaustrittsfläche austritt.

Es somit möglich, dass Licht nach einfacher Reflexion, aber auch nach Mehrfachreflexion aus der Linse austritt.

Um Streulicht zu vermeiden und um die Lichtausbeute zu optimieren, kann vorgesehen sein, dass der zumindest eine Einstrahlbereich als Einkoppelstelle ausgebildet ist, in welche die zugeordnete Lichtquelle Licht, vorzugsweise über ein Vorsatzoptikelement, einkoppelt.

In diesem Zusammenhang ist es ebenfalls von Vorteil, wenn die zumindest eine Lichtquelle, welche Licht über einen Einstrahlbereich in die Linse einstrahlt, eine oder mehrere Leuchtdioden umfasst.

Um beispielsweise Licht aus einer Lichtquelle optimal nutzen zu können, kann außerdem vorgesehen sein, dass eine reflektierende Fläche, welche einer Lichtquelle, welche Licht über einen Einstrahlbereich in die Linse einstrahlt, zugeordnet ist, der zugeordneten Lichtquelle - in Haupt-Lichtaustrittsrichtung der Lichtquelle gesehen - im Wesentlichen gegenüber liegt.

Um einen Totalreflexionsbereich der Linsen optimal nutzen zu können, kann es zweckmäßig sein, wenn ein Totalreflexionsbereich, welcher einer Lichtquelle, welche Licht über einen Einstrahlbereich in die Linse einstrahlt, zugeordnet ist, außerhalb der Haupt-Lichtaustrittsrichtung der zugeordneten Lichtquelle liegt.

Grundsätzlich kann die reflektierende Fläche, welche der Rückseite der Linse zugeordnet ist, z.B. als Reflektor ausgebildet sein, welcher in einer gewissen Distanz zu der Rückseite der Linse angeordnet ist. Von Vorteil ist es allerdings, wenn die eine reflektierende Fläche unmittelbar an der Rückseite der Linse angeordnet ist und vorzugsweise "einstückig" mit dieser ausgebildet ist. "Einstückig" bedeutet dabei nicht, dass reflektierende Fläche und Linse aus einem Material gebildet sein müssen, dass aber nach dem Aufbringen der reflektierenden Fläche die Linse und die reflektierende Fläche einen Bauteil bilden. Diese Ausgestaltung hat den Vorteil der geringeren Anzahl an Bauteilen, der einfacheren Handhabung im Zusammenbau und auch in Hinblick auf die optischen Eigenschaften ist diese Variante von Vorteil.

Von besonderem Vorteil ist es, wenn die zumindest eine reflektierende Fläche als reflektierende Beschichtung der Rückseite der Linse ausgebildet ist.

Bei einer konkreten nicht erfindungsgemäßen Variante kann vorgesehen sein, dass eine oder mehreren reflektierenden Flächen die Rückseite der Linse vollständig abschirmen oder diese, z.B. im Fall einer reflektierenden Beschichtung, vollständig abdecken. In diesem Fall ist, wenn die reflektierende(n) Fläche(n) nicht teiltransparent ist/sind, der Einsatz einer Leuchtenvorrichtung, welche Licht auf die Rückseite der Linse abstrahlt, nicht möglich.

Es kann aber auch vorgesehen sein, dass die eine oder die mehreren reflektierenden Flächen die Rückseite der Linse lediglich bereichsweise abschirmen oder diese lediglich bereichsweise abdecken.

Jene Bereiche der Rückseite der Linse, welche nicht abgeschirmt bzw. verdeckt sind, können dazu genutzt werden, dass wie bei bekannten Projektionssystemen eine Leuchtenvorrichtung Licht über die Rückseite in die Linse einstrahlt, welches dann zur Erzeugung einer Lichtverteilung in einen Bereich vor der Beleuchtungsvorrichtung abgestrahlt wird.

Verfügt die Linse an ihrer Rückseite über einen Totalreflexionsbereich so kann die Rückseite durch diese Bereiche auf bekannte Art und Weise wie bei einer "herkömmlichen" Linse von einer eigenen Leuchtenvorrichtung durchstrahlt werden.

Damit die Linse von der Rückseite her auch im Bereich von der reflektierenden Fläche durchstrahlt und so entsprechend zur Erzeugung einer Lichtverteilung genutzt werden kann, kann vorgesehen sein, dass die reflektierende Fläche als teil-transparente Fläche ausgebildet ist. Die Fläche lässt entsprechend von außerhalb der Linse kommendes Licht über die Rückseite in die Linse eintreten, sodass dieses Licht für die Erzeugung einer Lichtverteilung verwendet werden kann.

Neben der zumindest einen Lichtquelle, die wie oben beschrieben Licht in die Linse einstrahlt, kann es - wie schon erwähnt - auch noch von Vorteil sein, dass zumindest eine weitere Leuchtenvorrichtung vorgesehen ist, von welcher Licht auf die Rückseite der Linse abgestrahlt und von der Linse in einen Bereich vor der Beleuchtungsvorrichtung projiziert wird.

Erfindungsgemäß ist der Linse an ihrer Rückseite genau eine durchgehende, reflektierende Fläche zugeordnet, und/oder die Linse weist an ihrer Rückseite genau einen durchgehenden Totalreflexionsbereich auf.

Es sind somit nicht mehrere, kleinere reflektierende Flächen und/oder mehrere, kleinere Totalreflexionsbereiche vorgesehen, sondern es ist eine durchgehend, das heißt eine größere, zusammenhängende reflektierende Fläche und/oder ein durchgehender, größerer, zusammenhängender Totalreflexionsbereich vorgesehen.

Eine solche Ausgestaltung weist mehrere Vorteile auf. Einerseits ist gegenüber mehreren kleineren Bereichen die Herstellung deutlicher vereinfacht, andererseits ist auch die optische Auslegung bei einer großen, zusammenhängenden Fläche wesentlich einfacher, als wenn der reflektierende Bereich und/oder der Totalreflexionsbereich in mehrere Einzelbereiche bzw. Einzelflächen aufgeteilt ist.

Im Folgenden ist die Erfindung an Hand der Zeichnung näher erörtert. In dieser zeigt
Fig. 1 eine erste Ausführungsform einer erfindungsgemäßen Beleuchtungsvorrichtung,
Fig. 2 eine zweite Ausführungsform einer erfindungsgemäßen Beleuchtungsvorrichtung, und
Fig. 3 eine dritte Ausführungsform einer nicht erfindungsgemäßen Beleuchtungsvorrichtung.

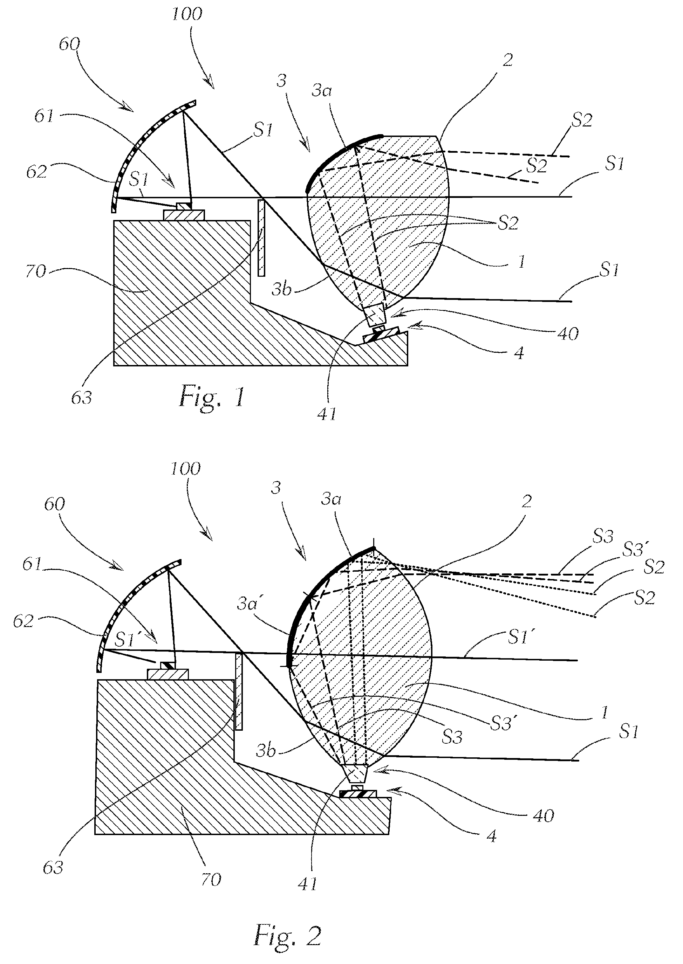

Figur 1 zeigt eine erste Variante einer erfindungsgemäßen Beleuchtungsvorrichtung 100. Diese besteht in bekannter Weise aus einer Leuchtenvorrichtung 60, von welcher Licht auf die Rückseite 3 einer Linse 1 abgestrahlt und von der Linse 1 in eine Bereich vor der Beleuchtungsvorrichtung projiziert wird (Lichtstrahlen S1). Bei der gezeigten Ausführungsform umfasst die Leuchtenvorrichtung 60 eine LED-Lichtquelle 61, welche eine oder mehrere Leuchtdioden umfasst, sowie einen Reflektor 62, über welchen das aus der Lichtquelle 61 austretende Licht auf die Linse 1 reflektiert wird. Die Lichtquelle 61 ist auf einem Montagekörper, der vorzugsweise als Kühlkörper 70 ausgebildet ist, angebracht. Im Strahlengang der Lichtstrahlen S1 ist eine Blende 63 angeordnet, deren Oberkante im Lichtbild als Hell-Dunkel-Grenze der Lichtverteilung, beispielsweise einer Abblendlichtverteilung abgebildet wird. Die Lichtstrahlen S1 treten dabei über einen Bereich 3b der Rückseite in die Linse 1 ein und über die Lichtaustrittsfläche 2 wieder aus.

Erfindungsgemäß verfügt die Linse 1 über eine durchgehende, zusammenhängende reflektierende Beschichtung 3a an ihrer Rückseite 3. In erster Linie ist in diesem Dokument unter "Rückseite in Hinblick auf die Anordnung der reflektierenden Fläche (bzw. bei anderen Varianten mit Totalreflexionsbereichen) jene Fläche/Seite der Linse zu verstehen, über welche bei einer "herkömmlichen Beleuchtungsvorrichtung Licht über die Leuchtenvorrichtung in die Linse eintreten kann. Prinzipiell können sich reflektierende Flächen und/oder Totalreflexionsbereiche aber auch in Bereichen oben/oberhalb, unten/unterhalb oder an den Seiten bzw. seitlich der Linse in Bereichen, in welche auch bei herkömmlichen Systemen eine Leuchtenvorrichtung Licht nicht strahlt, befinden.

Weiters ist eine Lichtquelle 4 vorgesehen, welche über einen Einstrahlbereich 40 Licht in die Linse 1 einstrahlt. Bei der konkreten Ausführungsform ist die Lichtquelle 4 ebenfalls auf dem Kühlkörper 70 angeordnet und umfasst eine oder mehrere Leuchtdioden. Licht aus der Lichtquelle 4 wird über eine Vorsatzoptik 41 in den als Einkoppelbereich ausgebildeten Einstrahlbereich 40 und somit in die Linse 1 eingestrahlt. Die entsprechenden Lichtstrahlen S2 werden an der reflektierenden Beschichtung 3a reflektiert und treten über die Lichtaustrittsfläche 2 aus der Linse 1 aus. Damit kann eine ergänzende Lichtverteilung realisiert werden, sodass sich beispielsweise mit einer Linse 1 ein Abblendlicht und zusätzlich ein Fernlicht oder Tagfahrlicht realisieren lassen.

Bei der in Figur 1 gezeigten Ausführungsform wird mit der Lichtquelle 4 eine additive Lichtverteilung oberhalb der Hell-Dunkel-Grenze der Abblendlichtverteilung (erzeugt mit der Leuchtenvorrichtung 60) realisiert, wobei die Ausrichtung der Lichtstrahlen S2 dabei von der Art der gewünschten Lichtverteilung abhängt.

Die Lichtquelle 40 befindet sich unterhalb der Linse 1, die Beschichtung 3a liegt der Lichtquelle 40 im Wesentlichen gegenüber in einem oberen Bereich der Linse 1. Die Beschichtung 3a befindet sich in einem rückseitigen Bereich der Linse 1 bzw. an der Rückseite 3, allerdings in diesem Beispiel in einem Bereich der Rückseite, welcher durch die spezielle abgeflachte Ausgestaltung von Licht aus der Leuchtenvorrichtung 60 nicht erreicht wird.

Figur 2 zeigt eine zu Figur 1 ähnliche Anordnung. Bei dieser Variante weist die Linse 1 allerdings eine etwas andere, weniger abgeflachte Formgebung an der Rückseite 3 auf. Licht aus der Leuchtenvorrichtung 60 tritt wiederum über den Bereich 3b der Rückseite 3 der Linse 1 in diese ein und wird in einen Bereich vor der Beleuchtungsvorrichtung 100 projiziert.

Grundsätzlich gilt für die Erfindung, also für alle gezeigten Varianten, dass die reflektierten Lichtstrahlen jeweils derart ausgerichtet sind, dass die gesetzlichen Vorschriften für das jeweilige Lichtbild erfüllt sind. Die reflektierende(n) Schicht(en) und/oder der/die Totalreflexionsbereiche sind dabei derart angeordnet und die zugeordnete Lichtquelle derart dazu ausgerichtet, dass die aus der Linse austretenden Strahlen in die korrekte, gewünschte Richtung abgestrahlt werden.

In einem oberen Bereich der Rückseite 3 der Linse 1 ist eine reflektierende Beschichtung 3a an der Linse 1 vorgesehen, daran nach unten anschließend ein Totalreflexionsbereich 3a' der Rückseite 3. Strahlen S2 aus der Lichtquelle 40 treffen auf die reflektierende Beschichtung 3a auf und werden von dieser über die Lichtaustrittsfläche 2 aus der Linse 1 herausprojiziert. Der Bereich 3a' wirkt für Strahlen S3, S3' aus der Lichtquelle 40 totalreflektierend. Strahlen S3 werden dabei von dem Bereich 3a' direkt über die Lichtaustrittsfläche 2 aus der Linse 1 herausprojiziert, während Strahlen S3' nach der Totalreflexion an dem Bereich 3a' noch auf die reflektierende Fläche 3a treffen, bevor sie aus der Linse 1 austreten.

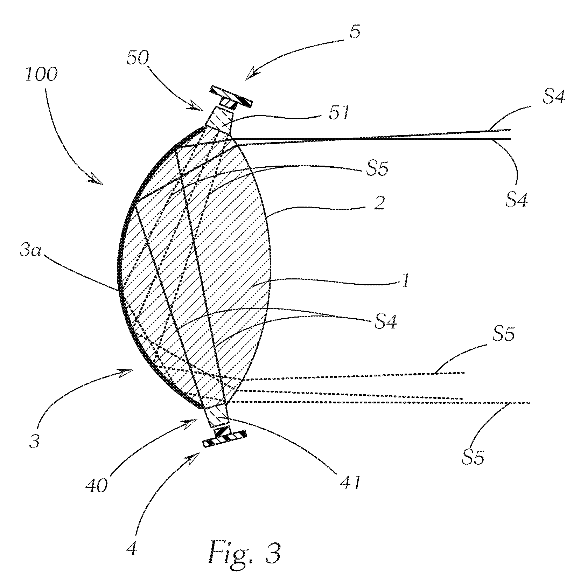

Strahlen S1' aus der Leuchtenvorrichtung 60 treffen an der Rückseite der Linse 1 im Bereich des Totalreflexionsbereiches 3a' auf und können über diesen in die Linse 1 eintreten und somit bei einer von der Leuchtenvorrichtung 60 gebildeten Lichtverteilung genutzt werden. Dieser Effekt kann alternativ auch damit erreicht werden, dass an Stelle des Totalreflexionsbereiches eine reflektierende Beschichtung vorgesehen wird, welche zumindest teilweise transparent ist. Dies bedeutet, dass die reflektierende Beschichtung (an Stelle des Totalreflexionsbereiches 3a') derart ausgebildet ist, dass sie für Licht aus der Leuchtenvorrichtung 60 transparent ist, während Licht, welches auf die andere Seite der Beschichtung trifft (also von der Lichtquelle 4 oder bei entsprechender Ergänzung der Variante aus Figur 3 um eine Leuchtenvorrichtung 60 von den Lichtquellen 4 und 5) reflektiert wird.

Diese Variante mit transparenter Beschichtung an Stelle eines Totalreflexionsbereiches kann den Nachteil haben, dass Licht der Lichtquelle 40 ungenutzt verloren gehen kann und dass es unter Umständen zu unerwünschten optischen Effekten kommen kann. Außerdem kann es sein, dass in diesem Fall mit erhöhten Transmissionsverlusten des Lichts aus der Leuchtenvorrichtung 60 zu rechnen ist.

Der Totalreflexionsbereich 3a' steht somit zwei Lichtquellen 40, 61 zur Bildung zweier Lichtverteilungen zur Verfügung.

Zur Erzeugung einer Tagfahrlichtverteilung in Kombination mit einem Abblendlicht an Hand einer Vorrichtung wie in Figur 1 oder 2 gezeigt kann beispielsweise eine Abblendlicht-Lichtquelle (Abblendlicht-LED) 61 derart gedimmt werden, dass ergänzend mit dem Licht der Lichtquelle 4 eine vollständige Tagfahrlichtverteilung generiert wird. Alternativ kann die durch die Lichtquelle 4 erzeugte Lichtverteilung auch so ausgeformt werden, dass durch deren alleinigen Einsatz die Tagfahrlichtfunktion umgesetzt wird. In diesem Fall kann die Lichtquelle 61 im Tagfahrbetrieb deaktiviert werden.

Ebenfalls möglich ist die gemeinsame Realisierung von Fernlicht und Tagfahrlicht. Hier kann analog zum oben beschriebenen Fall von Abblendlicht und Tagfahrlicht vorgegangen werden.

Außerdem möglich ist die gleichzeitige Umsetzung von Nebellicht und Tagfahrlicht, da die Lichtverteilung eines Nebelscheinwerfers eine symmetrische Hell-Dunkel-Grenze aufweist und entsprechend das Tagfahrlicht vergleichsweise einfach durch eine aufgesetzte" additive Lichtverteilung realisiert werden kann.

Insbesondere mittels einer seitlichen Lichteinkopplung könnte gegebenenfalls ein zusätzliches Abbiegelicht verwirklicht werden. Auch Kombinationen mehrerer Lichtfunktionen wie Abblendlicht, Fernlicht, Tagfahrlicht und Abbiegelicht in einem Linsen-Reflektor-Hybrid-System 100 sind möglich.

Figur 3 zeigt eine nicht erfindungsgemäße Variante welche über keine herkömmliche Leuchtenvorrichtung wie in Figur 1 oder 2 verfügt. Hier sind zwei Lichtquellen 4, 5 vorgesehen, welche jeweils über einen Einstrahlbereich 40, 50 Licht in die Linse 1 einstrahlen. Licht aus der Lichtquelle 4, 5 wird über eine Vorsatzoptik 41, 51 in den als Einkoppelbereich ausgebildeten Einstrahlbereich 40, 50 und somit in die Linse 1 eingestrahlt.

Die gesamte Rückseite 3 der Linse 1 ist mit einer durchgehenden, zusammenhängenden reflektierenden Beschichtung 3a versehen. Licht S4 von der unteren Lichtquelle 4 wird wie gezeigt über die Beschichtung 3a reflektiert und bildet beispielsweise eine Tagfahrlicht- oder Fernlichtverteilung oder trägt zu dieser bei. Licht S5 von der Lichtquelle 5 erzeugt beispielsweise ein Abblendlicht. Die Strahlen S4, S5 können an der Beschichtung einfach- oder mehrfach reflektiert werden.

Natürlich sind auch noch andere Kombinationen möglich, insbesondere sind die Varianten aus Figur 1 und 2 nicht auf lediglich eine Lichtquelle 4 und die Variante aus Figur 3 nicht auf lediglich zwei Lichtquellen 4, 5 eingeschränkt, sodass auch noch weitere Lichtfunktionen, z.B. ein Abbiegelicht realisiert werden können.

Auch wäre es in Figur 3 durchaus denkbar, zumindest einen Teil der Rückseite der Linse totalreflektierend oder teilweise transparent auszugestalten, sodass auch hier in bekannter Weise eine Leuchtenvorrichtung wie in Figur 1 bzw. 2 beschrieben noch zum Einsatz kommen kann. Weiters können durch eine zumindest teilweise totalreflektierende Ausführung der Rückseite Reflexionsverluste reduziert werden. Totalreflexion ist mit einem Wirkungsgrad von bis zu 100% möglich, während konventionelle Reflexion grundsätzlich mit Verlusten behaftet ist, z.B. mit ca.10% Verlust.

Mit einer erfindungsgemäßen Beleuchtungsvorrichtung bzw. mit einem oder zwei (z.B. linker und rechter Scheinwerfer bei einem Automobil, nebeneinander liegende Scheinwerfer bzw. Beleuchtungsvorrichtungen bei einem Motor(fahr)rad) entsprechenden Scheinwerfern lassen sich Lichtverteilungen erzeugen, welche die gesetzlichen Normen, wie SAE, CCC oder ECE erfüllen.

## Patentansprüche

1. Beleuchtungsvorrichtung (100) für ein Kraftfahrzeug, umfassend eine Linse (1) sowie zumindest eine Lichtquelle (4, 61), wobei Licht von der zumindest einen Lichtquelle (4, 61) von der Linse (1) in einen vor der Beleuchtungsvorrichtung (100) liegenden Bereich projiziert wird, wobei
der Linse (1) an ihrer Rückseite (3) genau eine durchgehende, reflektierende Fläche (3a) zugeordnet ist, und/oder die Linse (1) an ihrer Rückseite (3) genau einen durchgehenden Totalreflexionsbereich (3a') aufweist, und wobei
eine Lichtquelle (4) unterhalb der Linse (1) angeordnet ist und die genau eine durchgehende, reflektierende Fläche (3a) - in Haupt-Lichtaustrittsrichtung der Lichtquelle (4) gesehen - gegenüber liegt und/oder der genau eine durchgehende Totalreflexionsbereich (3a') der Lichtquelle (4) außerhalb der Haupt-Lichtaustrittsrichtung der zugeordneten Lichtquelle (4) liegt, und wobei
die Lichtquelle (4) über einen Einstrahlbereich (40) Licht derart in die Linse (1) einstrahlt, dass das in die Linse (1) über den Einstrahlbereich (40) eingestrahlte Licht von der genau einen reflektierenden Fläche (3a) und/oder dem genau einen Totalreflexionsbereich (3a') reflektiert und aus der Linse (1) über deren Lichtaustrittsfläche (2) austritt und in einen Bereich vor der Beleuchtungsvorrichtung (100) projiziert wird, und wobei
ein unterer Teil der Linse (1) als Projektionslinse ausgebildet ist, und eine Leuchtenvorrichtung (60) vorgesehen ist, von welcher Licht von Außen auf die Rückseite (3) auf den unteren Bereich der Linse (1) abgestrahlt und von der Linse (1) in einen Bereich vor der Beleuchtungsvorrichtung zur Erzeugung einer Lichtverteilung mit einer Hell-Dunkel-Grenze, z.B. einer Abblendlichtverteilung projiziert wird.

2. Beleuchtungsvorrichtung nach Anspruch 1, **dadurch gekennzeichnet, dass** zumindest ein Einstrahlbereich (40) außerhalb der Rückseite (3) der Linse (1) angeordnet ist.

3. Beleuchtungsvorrichtung nach Anspruch 1 oder 2, **dadurch gekennzeichnet, dass** der zumindest eine Einstrahlbereich (40) als Einkoppelstelle ausgebildet ist, in welche die zugeordnete Lichtquelle (4) Licht, vorzugsweise über ein Vorsatzoptikelement (41), einkoppelt.

4. Beleuchtungsvorrichtung nach einem der Ansprüche 1 bis 3, **dadurch gekennzeichnet, dass** die zumindest eine Lichtquelle (40), welche Licht über einen Einstrahlbereich (40) in die Linse einstrahlt, eine oder mehrere Leuchtdioden umfasst.

5. Beleuchtungsvorrichtung nach einem der Ansprüche 1 bis 4, **dadurch gekennzeichnet, dass** die zumindest eine reflektierende Fläche (3a) unmittelbar an der Rückseite (3) der Linse (1) angeordnet ist.

6. Beleuchtungsvorrichtung nach Anspruch 5, **dadurch gekennzeichnet, dass** die zumindest eine reflektierende Fläche (3a) als reflektierende Beschichtung der Rückseite (3) der Linse (1) ausgebildet ist.

7. Beleuchtungsvorrichtung nach einem der Ansprüche 1 bis 6, **dadurch gekennzeichnet, dass** ein oder mehrere der reflektierenden Flächen als teil-reflektierende Fläche ausgebildet sind.

8. Fahrzeugscheinwerfer mit zumindest einer Beleuchtungsvorrichtung nach einem der Ansprüche 1 bis 7.

## Claims

1. A lighting device (100) for a motor vehicle, comprising a lens (1) and at least one light source (4, 61), wherein light from the at least one light source (4, 61) is projected by the lens (1) into a region lying in front of the lighting device (100), wherein
exactly one continuous reflective surface (3a) is assigned to the lens (1) at the rear side (3) thereof, and/or the lens (1) has at the rear side (3) thereof exactly one continuous total reflection region (3a'), and wherein
a light source (4) is arranged beneath the lens (1) and is opposite the exactly one continuous reflective surface (3a), as viewed in the primary light exit direction of the light source (4), and/or the exactly one continuous total reflection region (3a') of the light source (4) is arranged outside the primary light exit direction of the assigned light source (4), and wherein
the light source (4) radiates light into the lens (1) via an incidence region (40) in such a way that the light radiated into the lens (1) via the incidence region (40) is reflected by the exactly one reflective surface (3a) and/or the exactly one total reflection region (3a') and emerges from the lens (1) via the light exit surface (2) thereof and is projected into a region in front of the lighting device (100), and wherein
a lower part of the lens (1) is formed as a projection lens, and a lamp device (60) is provided, from which light is radiation from outside onto the rear side (3) onto the lower region of the lens (1) and is projected by the lens (1) into a region in front of the lighting device in order to generate a light distribution with a light/dark boundary, for example a dipped beam distribution.

2. The lighting device according to Claim 1, **characterised in that** at least one incidence region (40) is arranged outside the rear side (3) of the lens (1).

3. The lighting device according to Claim 1 or 2, **characterised in that** the at least one incidence region (40) is formed as a coupling-in point, into which the assigned light source (4) couples light, preferably via an attachment optical element (41).

4. The lighting device according to one of Claims 1 to 3, **characterised in that** the at least one light source (40) radiating light into the lens via an incidence region (40) comprises one or more light-emitting diodes.

5. The lighting device according to one of Claims 1 to 4, **characterised in that** the at least one reflective surface (3a) is arranged directly on the rear side (3) of the lens (1)

6. The lighting device according to Claim 5, **characterised in that** the at least one reflective surface (3a) is formed as a reflective coating of the rear side (3) of the lens (1).

7. The lighting device according to one of Claims 1 to 6, **characterised in that** one or more of the reflective surfaces is/are formed as (a) partially reflective surface(s).

8. A vehicle headlight comprising at least one lighting device according to one of Claims 1 to 7.

## Revendications

1. Dispositif d'éclairage (100) pour un véhicule automobile, comprenant une lentille (1) ainsi qu'au moins une source de lumière (4, 61), sachant que de la lumière de la source de lumière (4, 61) au moins au nombre de une est projetée depuis la lentille (1) dans une zone se trouvant devant le dispositif d'éclairage (100), sachant
que précisément une surface (3a) continue, réfléchissante est associée à la lentille (1) au niveau de son côté arrière (3), et/ou que la lentille (1) présente, au niveau de son côté arrière (3), précisément une zone de réflexion totale (3a') continue, et sachant
qu'une source de lumière (4) est disposée sous la lentille (1) et que ladite surface (3a) réfléchissante continue fait face vue dans la direction de sortie de lumière principale de la source de lumière (4), et/ou que ladite zone de réflexion totale (3a') continue de la source de lumière (4) se trouve en dehors de la direction de sortie de lumière principale de la source de lumière (4) associée, et sachant
que la source de lumière (4) émet, par l'intermédiaire d'une zone d'émission de rayonnement incident (40), un rayonnement incident de lumière dans la lentille (1) de telle manière que la lumière émise par un rayonnement incident dans la lentille (1) par l'intermédiaire de la zone d'émission de rayonnement incident (40) est réfléchie par ladite surface (3a) réfléchissante et/ou par ladite zone de réflexion totale (3a') et sort de la lentille (1) par l'intermédiaire de la surface de sortie de lumière (2) de cette dernière et est projetée dans une zone devant le dispositif d'éclairage (100), et sachant
qu'une partie inférieure de la lentille (1) est réalisée sous la forme d'une lentille de projection, et qu'un dispositif lumineux (60) est prévu, duquel de la lumière est émise depuis l'extérieur sur le côté arrière (3) sur la zone inférieure de la lentille (1) et est projetée depuis la lentille (1) dans une zone devant le dispositif d'éclairage afin de produire une répartition de lumière présentant une limite clair-obscur, par exemple une répartition de la lumière des feux de croisement.

2. Dispositif d'éclairage selon la revendication 1, **caractérisé en ce qu'**au moins une zone d'émission de rayonnement incident (40) est disposée en dehors du côté arrière (3) de la lentille (1).

3. Dispositif d'éclairage selon la revendication 1 ou 2, **caractérisé en ce que** la zone d'émission de rayonnement incident (40) au moins au nombre de une est réalisée sous la forme d'un emplacement d'injection, dans lequel la source de lumière (4) associée injecte de la lumière, de préférence par l'intermédiaire d'un élément optique rapporté (41).

4. Dispositif d'éclairage selon l'une quelconque des revendications 1 à 3, **caractérisé en ce que** la source de lumière (40) au moins au nombre de une, qui émet un rayonnement incident de lumière par l'intermédiaire d'une zone de rayonnement incident (40) dans la lentille, comprend une ou plusieurs diodes électroluminescentes.

5. Dispositif d'éclairage selon l'une quelconque des revendications 1 à 4, **caractérisé en ce que** la surface (3a) réfléchissante au moins au nombre de une est disposée directement au niveau du côté arrière (3) de la lentille (1).

6. Dispositif d'éclairage selon la revendication 5, **caractérisé en ce que** la surface réfléchissante (3a) au moins au nombre de une est réalisée sous la forme d'un revêtement réfléchissant du côté arrière (3) de la lentille (1).

7. Dispositif d'éclairage selon l'une quelconque des revendications précédentes 1 à 6, **caractérisé en ce qu'**une ou plusieurs des surfaces réfléchissantes sont réalisées sous la forme d'une surface partiellement réfléchissante.

8. Phare de véhicule comprenant au moins un dispositif d'éclairage selon l'une quelconque des revendications 1 à 7.
